# EUROPEAN PATENT SPECIFICATION

(11) **EP 3 207 790 B1**
(45) Date of publication and mention of the grant of the patent: **24.07.2019**
(21) Application number: 17156092.3
(22) Date of filing: 14.02.2017
(51) Int. Cl.: A01G 2/30, A01G 2/35

(54) **CUTTING BLADE FOR GRAFTING PLANTS, DEVICE AND METHOD FOR GRAFTING PLANTS**
SCHNEIDMESSER FÜR GEPFROPFTE PFLANZEN, VORRICHTUNG UND VERFAHREN FÜR GEPFROPFTE PFLANZEN
LAME DE COUPE POUR PLANTES GREFFÉES, DISPOSITIF ET MÉTHODE POUR PLANTES GREFFÉES

(30) Priority: 19.02.2016 IT UB20160883
(43) Date of publication of application: 23.08.2017
(73) Proprietor: Bortolussi, Claudio, 33080 Fiume Veneto (PN) (IT); Bortolussi, Franco, 33080 Fiume Veneto (PN) (IT)
(72) Inventor: D'ANDREA, Daniele, 33095 San Giorgio della Richinvelda (PN) (IT)
(74) Representative: Giugni, Diego

(56) References cited:
- EP-A1- 1 566 093
- WO-A2-95/15078
- CN-A- 85 105 012
- FR-A1- 2 539 951
- FR-A2- 2 555 403
- SU-A1- 1 665 949
- US-A- 713 949

## Description

### TECHNICAL FIELD OF INVENTION

. The present invention refers to a cutting blade for grafting plants, a grafting device and a method for performing grafts on plants.

. In particular, the present invention refers to a blade designed to be used in a device for performing cuts on scions and rootstocks of plants in general, that is, herbaceous, woody or semi-woody vegetal material, ornamental plants, flower plants, fruit plants and similar. The invention is also relative to a manual, semiautomatic or automatic grafting device comprising said blade, and to a corresponding method for performing plant grafts.

### STATE OF THE ART

. In viticulture, grafting is a practice adopted consequential to the ravages caused by phylloxera at the end of the 1800s in European vineyards. After various attempts, the definitive solution of the problem was found through the creation of bi-member individuals, resistant to phylloxera, thanks to the adoption of the grafting technique. This technique involves the insertion of a bud or a herbaceous or semi-woody or woody scion (portion of a shoot) on a rooted stock already planted in the field or in the form of a rootstock cutting, forming in this manner the rootstock-scion (more commonly called scion-rootstock) union which, when made to root, will produce the grafted rootstock for final planting.

. Until the start of the 20th century, grafting was performed on the field on standing plants: cleft grafting in the spring, "T" (straight or reverse) annular budding in the summer, veneer budding in August; then wood grafting (rootstock plus scion), called English double cleft, was started in the second decennial of the 1900s. Later, with the help of machines, notch or omega-type grafting was adopted.

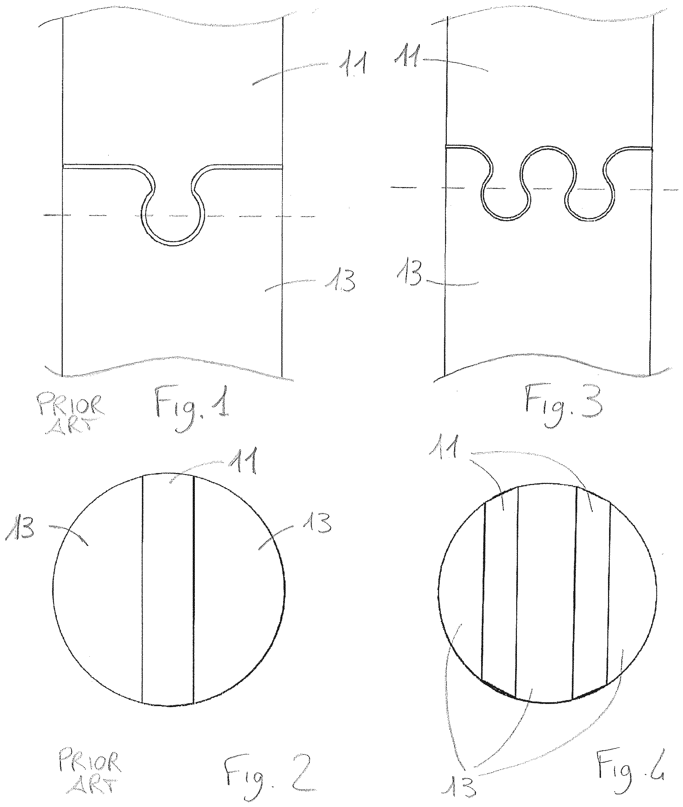

. Omega grafting takes its name from the fact that the shape of the cut resembles the omega (Ω) letter of the Greek alphabet, thus with a narrow base portion and a wide head portion. The cut is usually performed with metal blades that are formed from a flat rectangular blade that is then bent and curved to obtain a contoured cross section having an "Ω" shape, as can be seen in figure 1.

. Notch grafting found a widespread application in plant nurseries until about the 1980s, while omega grafting became prevalent afterwards. Regardless of the type of grafting or machine used, it is important that the cambium areas of the rootstock and the scion match and that they are as extensive as possible.

. In effect, the two cambium areas generate the scar tissue that allows the bonding of the two parts and the formation of the bi-member or dual-nature grafted plant resistant to phylloxera. Depending on the variety of the rootstock and the scion, on the type of grafting used, on the conditions of forcing applied to the scion-rootstock, and on the conditions of cultivation in the open field, it is possible to obtain different yields. On the average, a success of 60% can be considered as fair, that is, when 60% of marketable grafted rootstocks are obtained from 100 grafted rootstocks planted in the field, 75% can be considered as a good yield, and 90% is considered an excellent yield.

. The type of graft, associated with some inappropriate combinations (rootstock-variety) and cultural-agronomic methods, has a large influence on the yield in the nursery, and consequently on the physiological balance of the future vineyard. Some grafting combinations can degenerate into pathological forms due to the formation of abnormal hyperplasias.

. It was discovered that normally the omega graft, compared to notch grafting, gives rise to less regular healing scars (therefore smaller yields). On the other hand, omega grafting has found widespread use due to greater productivity achieved as compared to notch grafting, in other words: 500 grafts/hour/person for omega, compared to 200 grafts/hour/person for notch grafting.

.Another problem of omega grafting stems from the fragility of the bonding, since the omega protrusion at one end of the cut has a foot with a very thin cross section. One test that is generally carried out to evaluate the good yield of a graft is performed by gripping the grafted plant with the hand that holds the rootstock and pushing with the thumb against the scion. This is a manner of determining the weakness of the grafted connection which, when the plant is submitted to harsh environmental conditions, would cause the breaking of the grafted part.

.For notch grafting, instead, is utilized a machine that performs a "male-female" cut by means of two distinct milling cutters shaped with straight or rectangular cut, located respectively on the distal end of the rootstock and on the basal end of the scion. This machine, with respect to the machine that performs the omega-type cut, is less efficient, costlier, and more prone to wearing down. Such machines also perform a cut with problems due to the fact that the rootstock and the scion remain free to rotate with respect to each other around an axis orthogonal to the cuts, thus complicating the subsequent mating operations and making the connection itself less stable.

. Moreover, the cut performed with cutters or disk saws produces friction on the vegetal material and causes burns and/or scorchings that damage the live cells in contact with the tool.

.Another drawback found in notch grafting is a problem in determining the optimum dimensions of the material to remove to create the best possible notch. In fact, a notch that is obtained with low tolerance or even with negative allowance, to attempt to have a better stability and avoid the free rotation between the rootstock and scion, can result in an excessively tight joint. Consequently, the new healing tissue cells do not have sufficient space to grow near the two cambium areas, and thus risk growing in the proximal external area, thus causing a greater swelling compared to other grafting forms.

.Numerous efforts have subsequently been made to build semiautomatic machines.
SU 1665949 discloses an apparatus for grafting plants comprising a body and a knife for cutting out on a cuttings a thorn and a grove, the cutting part of the knife being in the form of a zigzag which is a straight and multidirectional wedge-shaped loop of different widths. The height of the supporting line of the knife does not exceed the height of both loops and the base of the wide loop does not exceed the width of the narrow loop and the double thickness of the knife blade.
WO 95/15078 discloses a horticultural cutting tool comprising two arms crossing at a pivot point and operating members provided with or mounting a blade, the device being characterized by means for positioning and holding the object to be cut.
CN 85105012 discloses a grafting knife having a long handle and a cuter device that is generally V-shaped.
US 713949 discloses a method for grafting consisting in making in both twigs, stock and scion, clefts all of equal width, separated by tongues all of equal thickness, the thickness of the of the tongues being slightly grater than the width of the clefts.
FR2539951 discloses a grafting machine using a conventional Ω-shaped cutting blade.

.French patent FR 2541562 describes a machine of this type, comprising a plurality of carriages pulled by a chain conveyor and provided with movable pincers in which are fastened the rootstocks and the scions in reciprocally overlapping positions. The cutting of the rootstocks and the scions is carried out with a single contoured knife which, with a single stroke in a direction orthogonal to the axis of the elements to graft, performs both the alignment and the shearing of the ends to be joined together. The machine must then align axially the stock and the scion to correctly perform the graft, and then proceed to discharging it. With this solution, an automatization of the process of "omega" grafting is obtained, but without solving the previously discussed problems.

### SUMMARY OF THE INVENTION

.The main objective of the subject matter of the present invention is to resolve the drawbacks of the prior art by devising a blade for cutting and grafting, a device and/or a method of grafting plants that allows a greater increase in production and overcomes the shortcomings and problems of the prior art.

.In the scope of the above objective, one purpose of the present invention is to devise a blade for cutting and grafting, a device and/or a method of grafting plants, which employs characteristics and/or steps that represent advantages and improvements over the prior art.

.A further objective is to make it possible to perform a faster cutting operation. Another purpose of the present invention is to achieve a firm and steady graft.

.A further purpose is to conceive a device or a machine and a method of performing grafts on plants that makes it possible to achieve a grafting cut starting from scions and rootstocks or other types of grafts for similar vegetal varieties, woody or semi-woody, preferably grapevine species, or fruit trees.

.The above objective and purposes, and others that will become more evident later, are achieved by a cutting blade for grafting as defined in claim 1, by a device and a method for grafting plants, as defined in the subsequent enclosed claims.

### BRIEF DESCRIPTION OF THE FIGURES

.Further characteristics and the advantages of the present invention will become more evident from the following description of a particular, but not exclusive, embodiment illustrated purely by way of non-limiting example with reference to the enclosed drawings, in which:
- figures 1 and 2 illustrate respectively a schematic lateral view and a schematic cross-sectional view of a graft made according to the prior art;
- figures 3 and 4 illustrate respectively a schematic lateral view and a schematic cross-sectional view of a graft made according to the present invention;
- figures 5, 6 and 7 illustrate respectively a view substantially from above, a front view and a view substantially from below, of a blade made according to the present invention;
- figure 5A illustrates a profile of an edge of the blade of figure 5;
- figures 8 to 11 each illustrate a profile of an edge of blades made according to variant embodiments of the invention;
- figures 12 and 13 illustrate a device according to the invention, arranged respectively according to a first and a second configuration;
- figures 14 and 14A illustrate two views in cross section of the device of figures 12 and 13, which show a blade and elements of the device near the same blade, obtained respectively by bisecting with a plane substantially transversal to the blade and with a plane substantially longitudinal to the blade;
- figures 15 to 23 illustrate different stages of a method for performing grafts according to the present invention.

### DETAILED DESCRIPTION OF THE INVENTION

.With reference to the above-mentioned figures, number 10 generically refers to a cutting blade for grafting according to the present invention, and numbers 110, 210, 310 and 410 refer to variants of a cutting blade for grafting according to the present invention.

.As can be seen in figures 1 and 2, a cut of omega-type, performed according to the prior art on a scion 11 and a stock 13, produces a particular cleft surface between the scion 11 and the stock 13, as can be seen in figure 2.

.By performing the cut with a blade 10 according to the invention, on a scion 11 and a rootstock 13 it is possible to obtain a joint surface, as can be seen in figures 3 and 4, that is substantially double in respect of the one obtained with the omega-type cut according to the prior art.

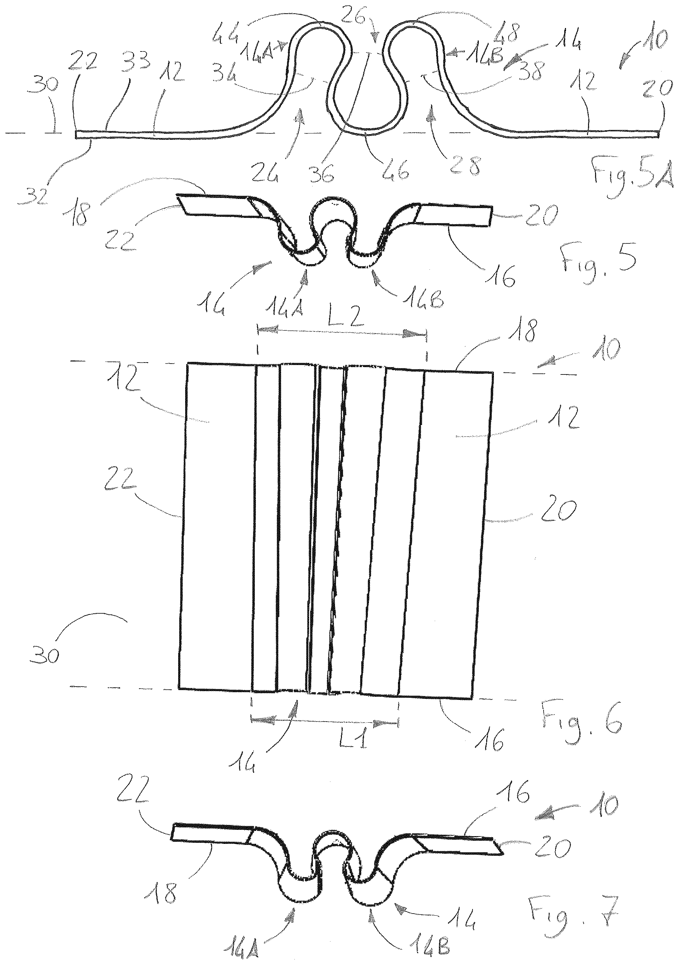

.As can be seen in figures 5 to 7, a cutting blade 10 for grafting according to the invention consists of a plate whose external perimeter comprises a first cutting edge 16, a second edge 18 opposite said first edge, a first lateral edge 20 opposite a second lateral edge 22. In particular, the plate comprises at least one flat portion 12 that lies on a first plane 30 having a first face 32 opposite a second face 33, and a contoured portion 14 that extends on a plane different from said first plane. In other words, the contoured portion represents an uplifted portion of the plate formed between two flat portions 12.

.The blade 10 can be, for example, obtained by bending a metallic foil to form the particular curvature of the contoured portion 14.

.The flat portion 12 is preferably used to associate the blade to the respective device and extends on two opposite sides with respect to the contoured portion 14.

.In the ensuing description reference will be made to a cutting contour, defined by the outline of the cut on the respective material to be processed, formed by means of the cutting edge 16.

.The flat portion 12 extends from the cutting edge 16 along the first plane 30 to as far as the upper edge 18. The first plane 30 is shown in figure 5A as a broken line, where the cutting edge 16 is also visible. Moreover, the cutting edge 16 has substantially a profile resembling a continuous line that extends from the first lateral edge 20 to the second lateral edge 22.

.Advantageously, the contoured portion 16 comprises a plurality of protruding tracts, for example two protruding tracts 14A and 14B as shown in figures 5-7, that protrude from the first plane 30 to perform the cut according to a cutting contour. Said protruding tracts form consequently a plurality of inlets.

.As can be seen in particular in figure 6, the flat portion 12 extends essentially along the first plane 30, while the contoured portion 14 extends away from said first plane 30 to form the above-mentioned protruding tracts 14A and 14B that are contoured and suitable to come into contact with the material to achieve the graft. The protruding tracts extend away from each other proceeding farther from the cutting edge 16, in which can be seen a first extension L1 of the contoured portion 14 with respect to the plane 30, toward the upper edge 18, in which the contoured portion 14 has a second extension L2, also with respect to the plane 30. In other words, the protruding tracts have a flared profile, forming generally the shape of a truncated cone.

**.As** can be seen, the two contoured protruding tracts 14A and 14B form three inlets, shown respectively with numbers 24, 26 and 28 in the contoured portion 14. Proceeding for example from the second lateral edge 22, the inlets 24, 26 and 28 are open alternately toward the first face 32 and toward the second face 33 of the first plane 30.

. In cross section, the three inlets 24, 26 and 28 display three constrictions, indicated respectively with numbers 34, 36 and 38, that meet proceeding from the second lateral edge 22, which are followed by widened portions that end with three extremal points or bottoms, indicated respectively with numbers 44, 46 and 48.

. Each extremal point has a respective distance from the first plane 30 and is a point of maximum relative distance or minimum relative distance, based on the relative distance from the first plane 30. As can be seen in figure 5A, two extremal points 44 and 48 are points of maximum relative distance separated by an extremal point 46 that is a point of minimum relative distance.

.The extremal points can also be defined as the points where the contour of the inlets displays a tangent parallel to the first plane 30, exemplifying conveniently a series of planes parallel to the first plane 30, that are useful to understanding the operation and the advantages of the blade 10 and of its variant embodiments according to the invention. In other words, the contoured portion 14 comprises a plurality of protruding tracts that fold upward with respect to the first plane 30.

.According to a first embodiment of the invention, as illustrated in figures 5 to 7, through each of the two extremal points 44 and 48 passes a respective plane parallel to the first plane 30, while the extremal point 46 is crossed by a plane coinciding with the first plane 30. Being at the same distance from the first plane 30, the planes passing through each of the two extremal points 44 and 48 coincide with each other.

.Thus, as already mentioned, each protruding tract 14A and 14B comprises, starting from the first plane 30, arranged in series with each other, respectively a constriction, a widening and an extremal point.

.In addition, as can be seen in figure 5A, each protruding tract has an inclined tract that connects the respective extremal points with the flat portion 12, for example the protruding tract 14A corresponding to the inlet 24 has an inclined tract that connects the extremal point 44 with the flat portion 12. In particular, the inclined tract has a profile without undercuts facing toward the flat portion 12.

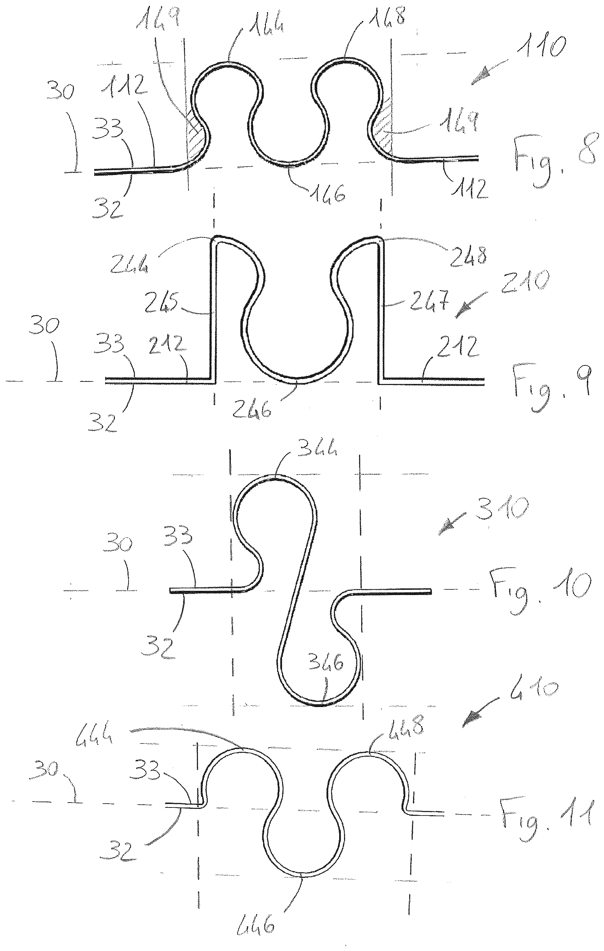

.As can be seen in figures 8 to 11, a blade according to the embodiments of the invention can have profiles of the respective cutting edge that are different from what is described above with regard to the blade 10. The parts in common with said blade 10 are identified with the same reference number.

.As shown in figure 8, a blade 110 also comprises three inlets and three extremal points 144, 146 and 148, correspondingly similar to those described for the blade 10. The blade 110 comprises at least one undercut tract in correspondence to respective inclined tracts comparable to those described for the blade 10, that is, tracts that connect the respective extremal points with the flat portion 12 forming at least one undercut. For example, the blade 110 comprises a protruding tract that displays an undercut 149 between the extremal point 144 and the flat portion 112. The blade 110 has an advantageous profile with respect to the blade 10 when the material to be cut has a transversal cross section larger than the width of its contoured portion, until it reaches the limit shown in the figure, shown schematically with two vertical lines.

.In fact, the blade 110 has an extension of the cutting contour that is larger than that of the blade 10 thanks to the presence of the undercuts.

.As shown in figure 9, the blade 210, according to an embodiment of the invention, includes a profile of the cutting edge comprising straight tracts 245 and 247 that connect respective extremal points 244 and 248 with a respective flat portion 212, avoiding undercut tracts.

.It should be noted that, when processing material having diameters smaller than, for example, 6 mm with the blade 110 of figure 8, the cutting contour obtained could form on the processed material two portions (shown in broken lines in figure 8) in correspondence of the undercuts 149 of the blade 110 that could be extremely weak, and therefore be easily damaged or even break off from the rest of the piece, thus leaving one part of the material uncovered and liable to problems, with the risk of making the graft unsuitable on the market.

.Advantageously, with the blade 210 said tracts are substantially orthogonal to the flat portion 212 so as not to have undercuts, like the bar 10 previously described. Thus will be avoided the above-mentioned extremely thin portions beside the contoured portion of the blade.

.The blades 10, 110, 210 and 410 comprise two inlets 24 and 28 that protrude from the first plane 30 on the second face 33 of the first plane 30.

.The blade 310, as shown in figure 10, comprises instead a first protruding tract, having a first extremal point 344, that protrudes from the first plane 30 on the second face 33 and a second protruding tract, having a second extremal point 346, that protrudes from the first plane 30 on the first face 32 opposite the second face 33. Preferably, the protruding tracts are specular with respect to the plane 30 and have a profile similar to the profile of the protruding tracts 144 and 148 of figure 8.

.The blade 410, as shown in figure 11, comprises advantageously three protruding tracts, each having an extremal point, indicated respectively with number 444, 446 and 448. A protruding tract, comprising the extremal point 446, protrudes with respect of the first plane 30 from the first face 32, while the other two protruding tracts, comprising the extremal points 444 and 448, protrude from the second face 33 of the first plane 30.

.The blades 310 and 410 advantageously define, with their respective extremal points, two planes parallel to the first plane 30, which increase the hold-fastness of the graft. Moreover, the same blades 310 and 410 have an even larger cut surface.

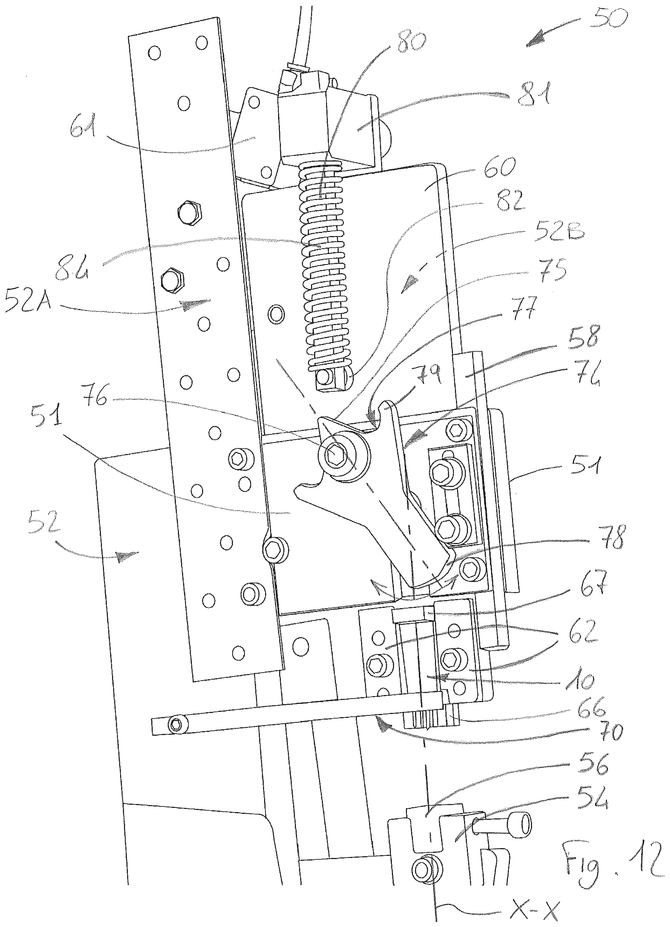

.With reference to figure 12 and the following ones, hereinbelow will be described a machine 50 or device, comprising the blade 10 previously described, capable of performing the cut and the connection between the rootstock and the scion.

.The machine 50 comprises:
- a support frame 52 having a first side 52A and a second side 52B opposite to each other;
- a movable carriage 60 associated to the frame 52 so as to move along a longitudinal cutting axis X-X;
- a blade 10 associated to the movable carriage 60 to perform a cut on a vegetal material 11, 13, dividing it into a useful part 11A, 13A and a waste part 11B, 13B and holding them on two opposite faces 32, 33 of the blade;
- a base 54 associated to the frame 52 for supporting said material 11, 13 and to abut against said blade;
- a mechanism 70, 66, 78 associated to the frame 52 to separate the waste part 11B, 13B from the blade.

.The base 54 of the frame 52, preferably, comprises a cushion 56 to facilitate the positioning of the material to be processed, the scion and the rootstock, not shown in the figure, which are to be cut and joined.

.The machine 50 can be mounted on a fixed support, for example a work platform, not shown in the figure.

.In particular, the frame 52 surrounds and guides the movable carriage 60, in cooperation with a guide column 58, as indicated in figure 12. The movable carriage 60 is preferably a block having a parallelepiped shape.

**.A** locating mechanism 61 can preferably be associated to the frame 52 near the upper end of the movable carriage 60, to sense when the movable carriage 60 reaches its top rest position, as is shown in figure 12, so as to activate a corresponding ejection means to clean the base from the waste material, for example a jet of compressed air near the base 54, not shown in the figure.

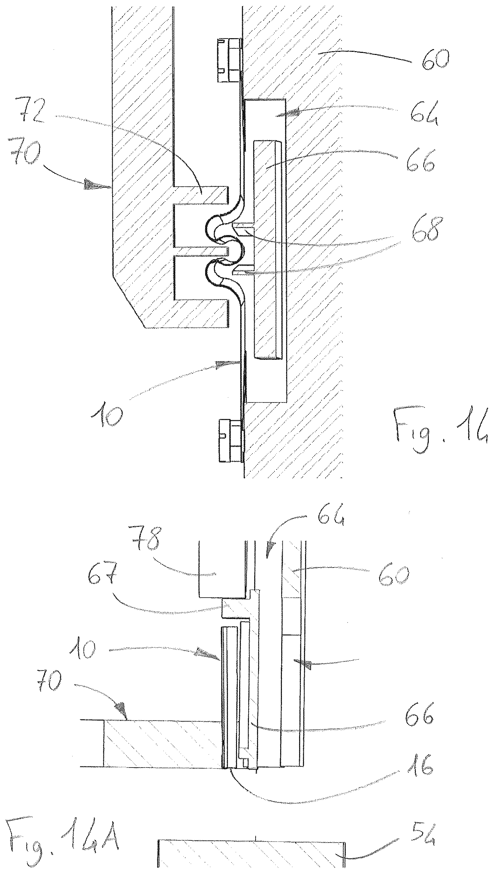

**.At** the lower end of the movable carriage 60, which faces the base 54, is associated a blade 10, more clearly visible in figures 14 and 14A. Naturally, another variant embodiment of the blade according to the invention, like one of those described previously, can also be associated.

.The blade 10 is associated to the movable carriage 60 with its cutting edge 16 facing the base 54. A downward movement of the movable carriage 60 thus enables the blade 10 to meet the base 54 to thereby perform the cut required for grafting.

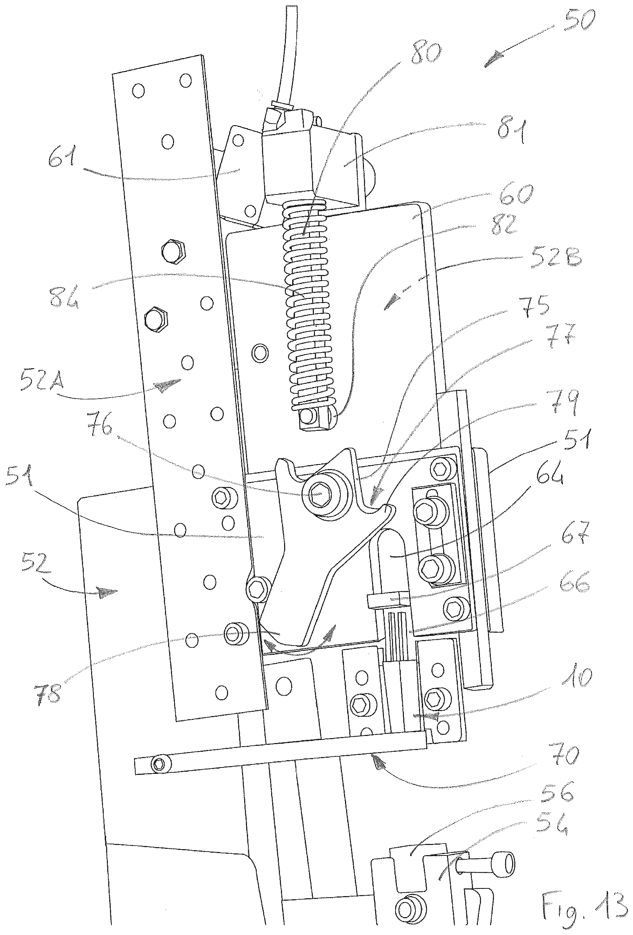

.The cut ends will be matching, since they are made with the same blade 10 but on two opposite sides of the machine, as will be better explained below. In fact, as already mentioned, a first side 52A, shown in figures 12 and 13, is conveniently defined and also a second side 52B is defined, opposite to the first side 52A, and not shown in the figures.

.Two fastening plates 62 spaced vertically and associated to the movable carriage 60, for example by means of screws, maintain the blade 10 associated to the movable carriage 60, for example on the first side 52A of the frame 52 and in correspondence with a rectangular seat 64 of the carriage itself which houses an extractor 66 (figure 14). Naturally, other means of fastening the blade to the movable carriage can be used.

.Moreover, the seat 64 of the movable carriage 60 is formed so as to guide the extractor 66 along said cutting axis X-X.

.In particular, the extractor 66 is movably associated to the movable carriage 60 and interposed between said carriage and the blade. In addition, it includes a head 67 that protrudes from said seat 64 and a pair of teeth 68 that extend longitudinally in the direction of said axis X-X so as to be inserted into the inlets of the contoured portion of the blade 10. Although in figure 14 the extractor 66 is shown detached, the same extractor 66 is in contact with the rear side of the blade 10 and with at least the side of the rectangular seat 64 opposite the blade 10. Since it is in direct contact with the side of the rectangular seat 64 opposite the blade 10 and with said blade 10, the extractor 66 is thus drawn by friction by the movement of the movable carriage 60 and of the blade itself 10, unless other elements are involved, as described hereunder, causing it to slide with respect to the same movable carriage 60.

.To help in understanding the construction of the machine 50, in figure 12 the extractor 66 is arranged in a position closer to the base 54 with respect to the blade 10, while in figure 13 the same extractor 66 is arranged in a position farther removed from the base 54.

.As shown in figure 14, the frame 52 also has connected to it a fixed abutment 70 that extends horizontally toward the blade 10 and is provided with teeth 72 that surround the contoured portion of the same, but without touching the blade 10 itself. Preferably, the fixed abutment is connected to the frame on its first side 52A.

.As can be seen in figure 14A, preferably the fixed abutment 70 has its lower edge arranged at a distance from the base 54 that is slightly smaller than the distance of the cutting edge 16 of the blade 10 when the blade is in a fully raised or idle position, as shown in the figure. The bottom end of the extractor 66 is preferably at the same level as the lower edge of the fixed abutment 70.

.As can be seen in figure 12, a selecting cam 74 comprises an upper part having substantially the shape of a W hinged by means of a pin 76 to the frame 52, preferably in contact in a manner to maintain its position by friction, for example with friction washers or other means, and an elongate lower part provided with an end-stop 78, suitable to abut against the head 67 of the extractor 66, as described hereinbelow. Preferably, the selecting cam 74 is hinged to the first side 52A of the frame 52.

.The upper part of the selecting cam 74 comprises a symmetrical cam profile. Only half of the profile will be described below, as the other half profile is symmetrical with respect to the pin 76. The half cam profile comprises a downward tract 75 that ends with a groove 77 and a wall 79, as shown in figure 12.

.An arm 80 is hinged by means of a shoulder 81 to the upper end of the movable carriage 60, and the arm has however the capability of sliding inside the shoulder 81. A roller 82 is hinged to the free end of the arm 80, opposite said shoulder, and is pushed toward the selecting cam 74 by a spring 84. When the movable carriage 60 is driven downward, the roller 82 comes into contact with one of the half profiles of the upper part of the selecting cam 74.

.The selecting cam 74 can move to two angular positions with respect to the first side 52A of the frame 52, as shown by the twin arrows shown respectively in figure 12 and 13. The two angular positions of the selecting cam 74 are selected by means of the downward tract of the arm 80 whose roller 82 comes into contact with the cam profile. With reference to figure 12, in fact, the roller 82 can move down and engage the downward tract 75 until it reaches the groove 77, where it pushes against the wall 79. This push induces the selecting cam 74 to rotate about its pin 76 so as to assume the other angular position, shown respectively in figure 13, that is, the position in which its end-stop 78 is moved away from the longitudinal cutting axis X-X of the blade 10. In this manner, the end-stop 78 can be positioned above the head 67 of the extractor 66, as is shown in figure 12, or it can be moved away from the head 67 of the extractor 66 as shown in figure 13, thus allowing the extractor 66 to move up, as is described below and shown conveniently in figure 13.

.Consequently, it is possible to control the change in the angular position of the selecting cam 74 in correspondence with every downward stroke of the movable carriage 60.

.When the movable carriage 60 moves up again, appropriate return-action means, for example springs or other elastic means non shown in the figures, tend to return the roller 82 into vertical alignment with the pin 81. Naturally, the pin 76 of the selecting cam 74 can be replaced with a suitable mechanism that moves the selecting cam 74 directly to the desired angular positions.

.Figure 14A illustrates the respective positions of the end-stop 78 and of the head 67 of the extractor 66, when the selecting cam 74 is disposed in the angular position shown in figure 12. In this configuration, the end-stop 78 thrusts against the head 67 thanks to the above-mentioned angular movement of the cam 74, which moves to the position corresponding with the X-X cutting axis. At the same time, the lower end of the extractor 66 is at the same level as the lower edge of the fixed abutment 70.

.This means that, when the end-stop 78 abuts against the head 67, the extractor 66 cannot move above its position as shown in figure 14A, that is, it cannot move farther away from the base 54.

.The movable carriage 60 is moved vertically by appropriate drive means. These drive means can be manual, for example through a pedal pushed by an operator for its downward movement and by return springs to return it to a raised position, or they can be semiautomatic, for example by connecting respectively the movable carriage 60 and the frame 52 to the two operating ends of a linear actuator. An operator will then be able to control the operation of the linear actuator.

.According to other variant embodiments of the invention, the motion of the movable carriage 60 can also be automatic, that is, driven by a predetermined processing cycle and operated by an automatic machine.

.Hereinbelow is described the operation of the machine 50 or device, with reference to figures from 15 to 23.

.The operator is preferably seated in front of the device 50, that is, on the right of the device shown in figure 12 and, for convenience, reference will be made, respectively, to the left side of the blade or to the right side of the blade indicating the side of the blade that is on the first side 52A or on the second side 52B of the frame 52 of the machine 50, as they were previously described. Naturally, the side of the blade considered below in each case is described by way of example but without limitations.

.Before starting the operation of the grafting device, the operator will check that the selecting cam 74 is in the angular position in which it holds the end-stop 78 positioned above the head 67 of the extractor 66, as shown in figures 12, 14A and 15.

.A first material, for example a bud or scion 11, is then inserted from the first side 52A, positioning the latter on the cushion 56 of the base 54, in such a manner as to have the scion 11 turned toward the right side of the blade 10, that is on the second side 52B opposite the first side 52A.

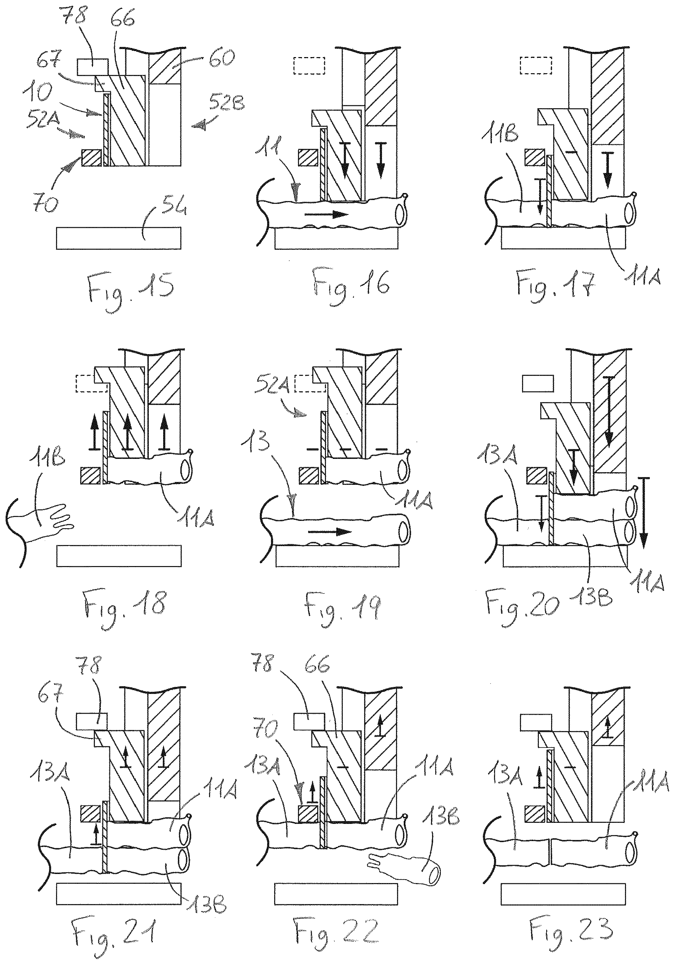

.The pedal-operated mechanism or linear actuator of the device, respectively, is now actuated to perform a first cutting stroke in which the movable carriage 60 moves downward, as is shown in figure 16 along the longitudinal cutting axis X-X, thus bringing the blade 10 and the extractor 66 to abut against the scion 11. At the same time, the end-stop 78 of the cam 74 is moved away from the longitudinal axis X-X.

**.As** it continues its downward travel, the movable carriage 60 pushes the blade 10 through the scion 11, dividing it into a useful part 11A and a waste part 11B, while the extractor 66 remains in abutment on the same useful part 11A, being able to move with respect to the movable carriage 60, as previously described.

.When the movable carriage 60 returns to its upper position, as can be seen in figure 18, the blade 10, being contoured, pulls with it both the useful part 11A and the waste part 11B of the scion 11, holding them thanks to the contoured sides of the contoured portion, that is, the flared portion.

.During the upward travel of the movable carriage 60, besides the blade 10 that is fastened to the same movable carriage 60, the extractor 66 also moves up, being supported from below thanks also to the useful part 11A.

.When the two parts of the scion 11 reach the fixed abut 70, the waste part 11B on the left side of the blade 10 becomes detached from the useful part 11A, while the latter, having no hindrances on that side, remains restrained by the bar 10. It should be noted that the detachment comes about because the thrust exerted by the upward moving carriage is such as to overcome the frictional resistance between the contoured portion 14 of the blade 10 and the vegetal material trapped there. In fact, the vegetal material has a certain roughness and springiness so that, once cut, it tends to expand and becomes stuck in said inlets of the blade.

.The extractor 66, resting on the useful part 11A of the scion 11, will have its head 67 higher than the blade 10, thus allowing the useful part 11A to remain attached to the blade 10.

.This position of the extractor 66 is possible because the end-stop 78 of the cam 74, as explained above, was moved away during the cutting stroke. In fact, the downward stroke of the movable carriage 60 brought the roller 82 to engage the selecting cam 74, causing it to rotate from the angular position shown in figure 12 to the angular position shown in figure 13, thus moving it away from the cutting axis X-X.

.As shown in figure 19, while the useful part 11A of the scion 11 remains held by the lifted blade 10, the upper end of the rootstock 13 is inserted on the base 54 from the first side 52A, so that the rootstock 13 extends toward the left side of the blade 10.

.As shown in figure 20, the device is now actuated for a second cutting stroke, as seen previously, during which the blade 10 penetrates through the rootstock 13 until it reaches the cushion 56, thus cutting the rootstock 13 into a useful part 13A and a waste part 13B. When the blade 10 penetrates into the rootstock 13, the useful part 11A of the scion, previously held back by the blade 10, is pushed upward by the waste part 13B, so that the latter takes its place. At this point, the extractor 66 is also moved a further distance upward from the cutting edge of the blade 10. At the same time, the downward movement of the arm 80 and the roller 82 has moved the selecting cam 74 again and returned the latter to the angular position of figure 12, thus achieving the positioning of the end-stop 78 above the head 67 of the extractor 66.

.As shown in figure 21, when the movable carriage 60 and the blade 10 return upward to the rest position, the upward moving blade 10 holds on its left side the useful part 13A of the rootstock and on its right side the waste part of the rootstock 13B, and above this the useful part 11A of the scion, since the useful part 13A and the waste part 13B of the rootstock 13 are in substantial alignment with each other. The fact that the end-stop 78 is positioned above the head 67 of the extractor 66 means that the latter is now precluded in its upward movement from going past the position shown in figure 21. In this manner, said material held on the right side of the blade 10 is not raised.

.On the contrary, as is shown in figure 22, the blade 10 continues to move upward, away from the base 54. Thus, the useful part 13A of the rootstock follows this movement upward until it reaches the height of the fixed abutment 70. At this point, the waste part 13B of the rootstock slips off from the blade 10 and falls on the right side of the blade and, consequently, the useful part 11A of the scion also slips off from the blade thanks to the stroke against the extractor 66, until it ends up substantially aligned horizontally with the useful part 13A of the rootstock on the right side of the contoured blade 10. This occurs because the end-stop 78 keeps the extractor 66 locked in position, so that its lower end is substantially orizzontally aligned with the lower edge of the fixed abutment 70, as shown in figure 22.

.The substantially aligned position of the useful part 13A and of the useful part 11A, of the rootstock and the scion respectively, means that the contoured cut of the useful part 11A of the scion is now engaged in the respective contoured corresponding cut of the useful part 13A of the rootstock, unless the blade 10 is still interposed between the two contoured cuts.

.As shown in figure 23, when the movable carriage 60 and the blade 10 continue their movement upward until they reach the upper rest position, both the useful part 11A and the useful part 13A, of the scion 11 and the rootstock 13 respectively, are now simultaneously removed by the blade 10, while they remain joined to each other thanks to their contoured ends.

.At the end of the return travel of the movable carriage 60, there is a resulting complete graft, after the cut and the grafting operations have been performed by the device 50, which is now ready for the insertion of a new scion to be grafted on a new rootstock.

.If the device 50 is provided with an ejection mechanism 61 as described above, for example one operated by compressed air, this facilitates the removal of the waste part 11B and of the waste part 13B, of the scion and the rootstock respectively, when these elements are detached or removed from the blade 10. In fact, the operator is spared the time and the attention necessary for removing any waste parts that remain on the cushion 56 or on the base 54, for example by operating a jet of compressed air or other ejection means, which is preferably actuated when the movable carriage 60 reaches it upper rest position.

.As can be easily gathered from the simplicity of the above operating procedure, the whole grafting operation, if carried out with a device 50 according to the invention, requires only a little time to perform the grafting.

.In fact, the scion 11 and the rootstock 13 can be positioned alternately and the movable carriage 60 can be operated as described above.

.A blade according to the invention can also be used with a manual grafting device of prior-art type, for example such as found in US7451544, in which a gripper includes two hinged graspable ends, that can be moved directly by the hand of an operator. A first graspable end is integral to a movable blade-support carriage and a second graspable end is integral to a base and to an abut that surrounds the blade.

.After having set down the material, that is, the scion or the rootstock, on the base, the two graspable ends are moved close to each other with the hand to move the blade against the base and thus perform the cut on the material. After this, when the two graspable ends are released they are free to move away, and consequently the blade moves away from the base. The abut surrounding the blade prevents the material from following the blade as the blade moves away from the base. The material is thus freed from the blade and the operator can perform another cut on another material.

**.A** blade according to the invention can also be used by means of another machine such as the one disclosed in EP1566093 in paragraphs from [0136] to [0151].

.In EP1566093, in fact, an automatic system, for example pneumatic or hydraulic, is used to drive the different components of the machine that perform the cut in two different work positions. A first work position is dedicated to a first step in which the scion is cut, holding the useful half with the blade and releasing the waste part. A second operating position is dedicated to a second step, in which the blade that held the useful part of the scion cuts the rootstock and in which afterward the waste part of the rootstock is discarded and the useful part of the scion and the useful part of the rootstock are aligned.

.Two stations, similar to each other, are arranged in a specular manner at the respective ends of a power-driven carousel, and each occupies one of the work positions, so that with one 180-degree rotation of the rotating carousel they swap their position to work each time on the respective material which is brought to them by suitable automatic feeding means. In other words, one station is first arranged in the first work position, where it receives a scion and cuts it, holds the respective useful part, and then moves, thanks to the 180-degree rotation of the rotating carousel, to the second work position where it receives a rootstock that it can cut it, discarding the respective waste part, and grafts it with the useful part of the scion.

. Automated feeding means are present for grasping the scion and rootstock and then positioning them respectively in the corresponding work positions where the two said stations are supplied.

. In particular, this machine is not provided with a fixed abut, as previously described, but the swap is carried out at the second work position, moving simultaneously a base (matrix 109 in EP1566093) into contact with the waste part of the rootstock and an extractor (the thruster 111 in EP1566093) into contact with the useful part of the scion. This simultaneous movement of the base and the extractor is possible, since the rootstock feeding means, an automated gripper, keeps the useful part of the rootstock in a substantially fixed position so that the scion can be pushed by the extractor.

. The gripper, remaining fixed in position, holds steady the useful part of the rootstock, which becomes detached from the waste half of the same, achieving subsequently the mating of the useful part of the scion with the useful part of the rootstock.

. This machine or device comprises:
- storage means;
- at least one grafting group comprising at least two diametrically opposite grafting units;
- a first automatic feeding group, for supplying a first material from said storage means to said grafting group;
- a second automatic feeding group, for supplying a second material from said storage means to said grafting group;
- a command and control unit for managing and coordinating with each other said grafting group, first automatic feeding group and second automatic feeding group;
- said grafting group comprising at least two grafting units suitable to be positioned alternately in a first work position, to perform a first step of grafting comprising at least the cutting of said first material, in cooperation with said first automatic group and in a second work position, to complete the grafting through the cutting of said second material and coupling the latter with said first material in cooperation with said second automatic group;
- rotating carousel means rotatably coupled to the frame to operate a 180-degree rotation of said at least one grafting group to move said two grafting units alternately in said work positions;
- at least two bases slidably associated to the rotating carousel means and respectively facing said first work position and said second work position, suitable to cooperate alternately with said first grafting unit and with said second grafting unit.

. Each of said two grafting units comprises in turn:
- a slidably movable carriage;
- a blade associated to the movable carriage for cutting said first material, holding its useful part in cooperation with one of said bases when the respective grafting unit is situated in said first work position and/or for cutting said second material in cooperation with one of said bases when the respective grafting unit is located in said second work position, and
- an extractor, cooperating with said blade and with said base, slidably movable from a lowered position, in which it is situated below said blade, to a raised position, suitable to push said useful part into alignment with the second cut material to complete the grafting when the respective grafting unit is situated in said second work position.

. A further objective of the present invention is a method for grafting plants according to the appended claim 11 comprising the following steps:
- cutting a first vegetal material orthogonally to its longitudinal axis to form two ends, each one of which having at least two complementary protrusions;
- cutting a second vegetal material in a manner identical to the cut made on the first material;
- grafting an end of the first material on a complementary end of the second material.

. In particular, the cutting steps on the first and second material are performed so that at least two protrusions are of substantially similar size.

. Alternately, the cutting steps on the first and second material are performed so that said at least two protrusions are different in size.

. Preferably, the method is carried out with the blade and the procedure as previously described.

. Another objective of the invention is to provide a plant according to the appended claim 14 having a grafted portion achieved with the use of a blade and a device as previously described.

. In particular, the plant includes a grafting contour forming on the circumference of the plant at least four lobes or inlets between a rootstock portion and a scion portion.

. From the above, it is evident that with a blade and/or a device according to the invention as described above it is possible to obtain a larger exchange surface between the rootstock and the scion, so as to increase the healing surface, making it more resistant to mechanical strains. In fact, a larger exchange surface is achieved through the cut, thus resulting in fewer obstructions of the sap vessels and allowing the downward flow of the sap, thus avoiding the formation of a hypertrophic collar. Even if the number of cut sap vessels remains equal, with a blade according to the invention the connecting surface of the sap vessels is increased, thus guaranteeing a smaller obstruction and a more stable graft.

. Surprisingly, it was also noted that the cut made with a blade and/or a device according to the invention makes it substantially possible to leave, between the scion and the rootstock, a minimum space resulting from the thickness of the blade. This space is useful to favour the growth of new cells forming on the exchange surface to originate optimum healing. Obviously, the space will be restricted because, on one hand, the blade is thin, and on the other hand, as previously mentioned, the cut material has a degree of springiness and, therefore, it tends to expand after being cut. Vice versa, an excessively tight graft, for example as with the machine previously described in paragraph [0011], could not favour the new cells that are expected to form on the exchange surface.

**.** It follows that a blade and/or a device according to the invention makes it possible to achieve a stronger rootstock/scion graft than can be obtained with the prior art, precisely because the contoured grafting that is achieved extends over a wide surface so that the contact surface between the parts being grafted is increased. Consequently, the result is a firmer graft.

. In addition, a blade and/or a device according to the invention performs a substantially cold cut, without causing burns and/or scorches, safeguarding the living cells that afterward are in better condition for the healing process.

. The contoured graft achieved with a blade and/or a device according to the invention also makes it possible to have a graft with more than one graft holding plane, for example two or three holding planes for the graft, as previously described, so that the stability and firmness of the graft is further improved, in addition to further increasing the exchange surface.

. The materials and equipment used to implement the present invention, as well as the forms and dimensions of the individual components, can be the most suitable for the specific requirements, without however departing from the scope of patent protection as defined by the enclosed claims. For example, according to a variant embodiment of the invention, a blade similar to the blade 10 can have the two extremal points arranged at a different distance from the first plane, so as to have more holding planes, similarly to the blades 310 and 410.

## Claims

1. Cutting blade (10;110;210;310;410) for grafting plants, consisting of a plate provided with a first cutting edge (16), a second edge (18) opposite to said first cutting edge (16), a first lateral edge (20) opposite to a second lateral edge (22), wherein said plate comprises at least a flat portion (12;112;212) lying on a first plane (30), which plane has a first face (32) opposite to a second face (33), and a contoured portion (14) that extends on a plane different from said first plane (30), said contoured portion (14) comprising a plurality of tracts (14A,14B) that protrude with respect to the first plane (30) for forming a plurality of inlets (24,26,28), **characterized in that** each protruding tract comprises in cross section, beginning from the first plane (30) and arranged in series with each other, a constriction (34,36,38), an enlargement and an extremal point (44,46,48;144,146,148;244,246,248;344,346;444,446,448) so that to create undercuts.

2. Cutting blade (10;110;210) according to claim 1, wherein said plurality of protruding tracts (14A,14B) protrude from said first face (32) of first plane (30).

3. Cutting blade (310;410) according to claim 1, wherein at least one of said plurality of protruding tracts (344;444,448) protrudes from the first face (32) of the first plane (30) and wherein at least one of said plurality of protruding tracts (346;446) protrudes from the second face (33) of the first plane (30).

4. Cutting blade (10;110;210;310;410) according to any one of claims from 1 to 3, wherein each tract of said plurality of protruding tracts comprises an extremal point (44,46,48;144,146,148;244,246,248;344,346;444,446,448) that is a point of maximum relative distance from the first plane (30) or a point of minimum relative distance from the first plane (30), said extremal point being crossed by a plane parallel to the first plane (30).

5. Cutting blade (10;210;410) according to any one of claims from 1 to 4, wherein each protruding tract (14A,14B) has an inclined tract having a profile without undercuts and that connects the respective extremal point (44,48;244,248;444,448) with the flat portion (12;212).

6. Cutting blade (410) according to any one of claims from 1 to 5, wherein said contoured portion (14) comprises two protruding tracts (444,448) that protrude from said second face (33) of said first plane (30) separated by a protruding tract (446) that protrudes from said first face (32) of said first plane (30).

7. Device for obtaining grafted plants comprising a cutting blade according to any one of claims from 1 to 6.

8. Device according to claim 7, comprising:
- a supporting frame (52) having a first side (52A) and a second side (52B) opposite to each other;
- a movable carriage (60) associated to the frame (52) in order to move along a longitudinal axis (X-X);
- said blade (10;110;210;310;410) being connected to the movable carriage (60) for operating a cut of a vegetal material (11,13) in order to divide said material in a useful part (11A;13A) and a waste part (11B;13B) and to hold said parts on two opposite sides;
- a base (54) connected to the frame (52) to support said material (11,13) and to abut with said blade;
- a mechanism (70,66,78) associated to the frame (52) to separate the waste part (11B;13B) from the blade.

9. Device according to claim 8, wherein said mechanism comprises:
- an extractor (66) movably connected to the movable carriage (60) and interposed between the movable carriage (60) and the blade, comprising two teeth (68) that are at least partially inserted in the inlets of the blade, and a head (67);
- a fixed abut (70) connected to the frame (52) on the first side (52A) comprising three teeth (72) that surround at least partially said inlets of the blade;
- a cam (74) provided with an end-stop (78) and being connected to the frame (52) in order to move in a first position away from said head (67) of the extractor (66) and in a second position near said head so as to prevent the extractor to move in a sense along the direction of the axis (X-X).

10. Device according to claim 8, further comprising:
- storage means;
- at least a grafting group comprising at least two grafting units diametrically opposite;
- a first automatic group, for feeding a first material from said storage means to said grafting group;
- a second automatic group, for feeding a second material from said storage means to said grafting group;
- a command and control unit for managing and coordinating with each other said grafting group, first automatic feeding group and second automatic feeding group;
- said grafting group comprising at least two grafting units able to be positioned alternately in a first work position, to perform a first step of the grafting comprising at least the cutting of said first material, in cooperation with said first automatic group and in a second work position, to complete the grafting through cutting said second material and coupling the latter with said first material in cooperation with said second automatic group;
- rotating carousel means rotatably coupled to the frame to operate a 180 degrees rotation of said at least one grafting group to move said two grafting units alternately in said working positions;
- at least two bases slidably associated to the rotating carousel means and respectively facing said first work position and said second work position, able to cooperate alternately with said first grafting unit and with said second grafting unit;
- each of said two grafting units in turn comprising:
i. a slidably movable carriage;
ii. a blade associated to the movable carriage for cutting said first material keeping its useful part in cooperation with one of said bases when the respective grafting unit is situated in said first work position and/or for cutting said second material in cooperation with one of said bases when the respective grafting unit is situated in said second work position; and
iii. an extractor, cooperating with said blade and said base, slidably movable from a lowered position, in which is situated below said blade, to a raised position able to drive said useful part in alignment with the cut second material to complete the grafting when the respective grafting unit is situated in said second work position.

11. Method to obtain grafts of plants, comprising the following steps:
- cutting a first vegetal material orthogonally to its longitudinal axis to form two ends each one having at least two complementary protrusions comprising in cross section, beginning from a first plane and arranged in series with each other, a constriction, an enlargement and an extremal point so that to create undercuts;
- cutting a second vegetal material in a manner identical to the cutting of the first vegetal material;
- grafting an end of the first material on a complementary end of the second material.

12. Method according to claim 11, wherein the cutting steps of the first and second material are performed so that said at least two protrusions have substantially similar size.

13. Method according to claim 11, wherein the cutting steps of the first and second material are performed so that said at least two protrusions have different size.

14. Plant comprising a grafting contour forming at least four lobes or inlets on the circumference of the plant between a rootstock portion and a scion portion, said contour comprising in cross section, beginning from a first plane and arranged in series with each other, a constriction, an enlargement and an extremal point so that to create undercuts.

## Patentansprüche

1. Schneidmesser (10; 110; 210; 310; 410) zum Pfropfen von Pflanzen, bestehend aus einer mit einer ersten Schneidkante (16) versehenen Platte, einer der ersten Schneidkante (16) gegenüberliegenden zweiten Kante (18), einer ersten Seitenkante (20) gegenüberliegend einer zweiten Seitenkante (22), wobei die Platte wenigstens einen flachen Abschnitt (12; 112; 212), der auf einer ersten Ebene (30) liegt, wobei diese Ebene eine erste Fläche (32) gegenüberliegend einer zweiten Fläche (33) hat, und einen konturierten Abschnitt (14) umfasst, der sich in einer von der ersten Ebene (30) verschiedenen Ebene erstreckt, wobei der konturierte Abschnitt (14) eine Vielzahl von Bahnen (14A, 14B) aufweist, die in Bezug auf die erste Ebene (30) hervorragen, um eine Vielzahl von Einlässen (24, 26, 28) auszubilden, **dadurch gekennzeichnet, dass** jede hervorstehende Bahn im Querschnitt, beginnend von der ersten Ebene (30) und in Reihe zueinander angeordnet, eine Einschnürung (34, 36, 38), eine Erweiterung und einen äußersten Punkt (44, 46, 48; 144, 146, 148; 244, 246, 248; 344, 346; 444, 446, 448) aufweist, so dass Hinterschneidungen entstehen.

2. Schneidmesser (10; 110; 210) nach Anspruch 1, bei dem die Vielzahl von hervorstehenden Bahnen (14A, 14B) von der ersten Fläche (32) der ersten Ebene (30) hervorstehen.

3. Schneidmesser (310; 410) nach Anspruch 1, bei dem wenigstens einer der mehreren hervorstehenden Bahnen (344; 444, 448) von der ersten Fläche (32) der ersten Ebene (30) hervorsteht und wenigstens einer der Vielzahl von hervorstehenden Bahnen (346; 446) von der zweiten Fläche (33) der ersten Ebene (30) hervorsteht.

4. Schneidmesser (10; 110; 210; 310; 410) nach einem der Ansprüche 1 bis 3, bei dem jede Bahn der Vielzahl von hervorstehenden Bahnen einen äußersten Punkt (44, 46, 48; 144, 146, 148; 244, 246, 248; 344, 346; 444, 446, 448) aufweist, der ein Punkt maximaler relativer Entfernung von der ersten Ebene (30) oder ein Punkt minimaler relativer Entfernung von der ersten Ebene (30) ist, wobei der äußerste Punkt von einer Ebene parallel zu der ersten Ebene (30) gekreuzt wird.

5. Schneidmesser (10; 210; 410) nach einem der Ansprüche 1 bis 4, bei dem jede hervorstehende Bahn (14A, 14B) eine schräge Bahn hat, die ein Profil ohne Hinterschneidungen aufweist und die den jeweiligen äußersten Punkt (44, 48; 244, 248; 444, 448) mit dem flachen Abschnitt (12; 212) verbindet.

6. Schneidmesser (410) nach einem der Ansprüche 1 bis 5, bei dem der konturierte Abschnitt (14) zwei hervorstehende Bahnen (444,448) aufweist, die von der zweiten Fläche (33) der ersten Ebene (30) hervorstehen, getrennt durch eine hervorstehende Bahn (446), die von der ersten Fläche (32) der ersten Ebene (30) hervorsteht.

7. Vorrichtung zur Gewinnung von gepfropften Pflanzen mit einem Schneidmesser nach einem der Ansprüche 1 bis 6.

8. Vorrichtung nach Anspruch 7, umfassend:
- einen Tragrahmen (52) mit einer ersten Seite (52A) und einer zweiten Seite (52B), die einander gegenüberliegen;
- einen beweglichen Schlitten (60), der dem Rahmen (52) zugeordnet ist, um sich entlang einer Längsachse (X-X) zu bewegen;
- die Klinge (10; 110; 210; 310; 410), die mit dem beweglichen Schlitten (60) verbunden ist, um einen Schnitt eines Pflanzenmaterials (11, 13) auszuführen, um das Material in einen nützlichen Teil (11A; 13A) und einen Abfallteil (11B; 13B) zu teilen und die Teile auf zwei gegenüberliegenden Seiten zu halten;
- eine Basis (54), die mit dem Rahmen (52) verbunden ist, um das Material (11, 13) abzustützen und an die Klinge anzulegen;
- einen Mechanismus (70, 66, 78), der dem Rahmen (52) zugeordnet ist, um den Abfallteil (11B; 13B) von der Klinge zu trennen.

9. Vorrichtung nach Anspruch 8, bei der der Mechanismus umfasst:
- einen Extraktor (66), der beweglich mit dem beweglichen Schlitten (60) verbunden ist und zwischen dem beweglichen Schlitten (60) und der Klinge angeordnet ist, umfassend zwei Zähne (68), die wenigstens teilweise in die Einlässe der Klinge eingesetzt sind, und einen Kopf (67);
- einen festen Anschlag (70), der an der ersten Seite (52A) mit dem Rahmen (52) verbunden ist und drei Zähne (72) aufweist, die die Einlässe der Klinge wenigstens teilweise umgeben;
- eine Nocke (74), die mit einem Endanschlag (78) versehen ist und mit dem Rahmen (52) verbunden ist, um sich in einer ersten Position von dem Kopf (67) des Extraktors (66) weg und in eine zweite Position in der Nähe des Kopfes zu bewegen, um zu verhindern, dass sich der Extraktor in einer Richtung entlang der Achse (X-X) bewegt.

10. Vorrichtung nach Anspruch 8, weiterhin umfassend:
- eine Aufbewahrungseinrichtung;
- wenigstens eine Pfropfgruppe mit wenigstens zwei diametral gegenüberliegenden Pfropfeinheiten;
- eine erste automatische Gruppe zum Zuführen eines ersten Materials von der Aufbewahrungseinrichtung zu der Pfropfgruppe;
- eine zweite automatische Gruppe zum Zuführen eines zweiten Materials von der Aufbewahrungseinrichtung zu der Pfropfgruppe;
- eine Befehls- und Steuereinheit zum Verwalten und Koordinieren der Pfropfgruppe, der ersten automatischen Zuführgruppe und der zweiten automatischen Zuführgruppe miteinander;
- wobei die Pfropfgruppe wenigstens zwei Pfropfeinheiten umfasst, die alternierend in einer ersten Arbeitsposition, um einen ersten Schritt der Pfropfung, der wenigstens das Schneiden des ersten Materials umfasst, in Zusammenwirken mit der ersten automatischen Gruppe auszuführen, und in einer zweiten Arbeitsposition positioniert werden kann, um das Pfropfen durch Schneiden des zweiten Materials und Koppeln des letzteren mit dem ersten Material in Zusammenwirken mit der zweiten automatischen Gruppe zu vervollständigen;
- eine drehbare Karusselleinrichtung, die drehbar mit dem Rahmen verbunden ist, um eine 180-Grad-Drehung der wenigstens einen Pfropfgruppe zu bewirken, um die zwei Pfropfeinheiten abwechselnd in die Arbeitspositionen zu bewegen;
- wenigstens zwei Basen, die der rotierenden Karusselleinrichtung verschiebbar zugeordnet sind und jeweils der ersten Arbeitsposition und der zweiten Arbeitsposition zugewandt sind und abwechselnd mit der ersten Pfropfeinheit und der zweiten Pfropfeinheit zusammenwirken können;
- wobei jede der beiden Pfropfeinheiten ihrerseits umfasst:
i. einen verschiebbar beweglichen Schlitten;
ii. eine dem beweglichen Schlitten zugeordnete Klinge zum Schneiden des ersten Materials, wobei ihr nützlicher Teil mit einer der Basen zusammenwirkt, wenn sich die jeweilige Pfropfeinheit in der ersten Arbeitsposition befindet, und/oder zum Schneiden des zweiten Materials mit einer der Basen zusammenwirkt, wenn sich die jeweilige Pfropfeinheit in der zweiten Arbeitsposition befindet; und
iii. einen Extraktor, der mit der Klinge und der Basis zusammenwirkt, der verschiebbar von einer abgesenkten Position, in der er sich unter der Klinge befindet, in eine erhöhte Position bewegbar ist, in der er in der Lage ist, den nützlichen Teil in Ausrichtung mit dem geschnittenen zweiten Material zu bewegen, um das Pfropfen zu vervollständigen, wenn sich die jeweilige Pfropfeinheit in der zweiten Arbeitsposition befindet.

11. Verfahren zur Gewinnung von Pflanzentransplantaten, umfassend die folgenden Schritte:
- Schneiden eines ersten Pflanzenmaterials orthogonal zu seiner Längsachse, um zwei Enden zu bilden, von denen jedes wenigstens zwei komplementäre Vorsprünge aufweist, die im Querschnitt ausgehend von einer ersten Ebene in Reihe zueinander eine Einschnürung, eine Vergrößerung und einen äußersten Punkt aufweisen, um damit Hinterschneidungen zu erzeugen;
- Schneiden eines zweiten Pflanzenmaterials auf eine Weise, die mit dem Schneiden des ersten Pflanzenmaterials identisch ist;
- Pfropfen eines Endes des ersten Materials auf ein komplementäres Ende des zweiten Materials.

12. Verfahren nach Anspruch 11, bei dem die Schneideschritte des ersten und des zweiten Materials so ausgeführt werden, dass die wenigstens zwei Vorsprünge eine im Wesentlichen ähnliche Größe aufweisen.

13. Verfahren nach Anspruch 11, bei dem die Schneideschritte des ersten und zweiten Materials so ausgeführt werden, dass die wenigstens zwei Vorsprünge unterschiedliche Größe haben.

14. Pflanze mit einer Pfropfkontur, die an dem Umfang der Pflanze zwischen einem Wurzelstockabschnitt und einem Sprossabschnitt wenigstens vier Lappen oder Einlässe bildet, wobei die Kontur im Querschnitt ausgehend von einer ersten Ebene und in Reihe zueinander eine Einschnürung, eine Vergrößerung und einen äußersten Punkt umfasst, so dass Hinterschneidungen entstehen.

## Revendications

1. Lame de coupe (10 ; 110 ; 210 ; 310 ; 410) pour greffer des plantes, consistant en une plaque munie d'un premier bord coupant (16), d'un deuxième bord (18) opposé audit premier bord coupant (16), d'un premier bord latéral (20) opposé à un deuxième bord latéral (22), dans laquelle ladite plaque comprend au moins une partie plate (12 ; 112 ; 212) s'étendant sur un premier plan (30), lequel plan a une première face (32) opposée à une deuxième face (33) et une partie profilée (14) qui s'étend dans un plan différent dudit premier plan (30), ladite partie profilée (14) comprenant une pluralité de zones (14A, 14B) faisant saillie par rapport au premier plan (30) pour former une pluralité d'entrées (24, 26, 28), **caractérisée en ce que** chaque zone saillante comprend en coupe transversale, partant du premier plan (30) et disposées en série les unes avec les autres, une constriction (34, 36, 38), un grossissement et un point extrême (44, 46, 48 ; 144, 146, 148 ; 244, 246, 248 ; 344, 346 ; 444, 446, 448) de sorte à créer des contre-dépouilles.

2. Lame de coupe (10 ; 110 ; 210) selon la revendication 1, dans laquelle ladite pluralité de zones saillantes (14A, 14B) font saillie à partir de ladite première face (32) du premier plan (30).

3. Lame de coupe (310 ; 410) selon la revendication 1, dans laquelle au moins l'une de ladite pluralité de zones saillantes (344 ; 444, 448) fait saillie à partir de la première face (32) du premier plan (30) et dans laquelle au moins l'une de ladite pluralité des zones saillantes (346 ; 446) fait saillie à partir de la deuxième face (33) du premier plan (30).

4. Lame de coupe (10 ; 110 ; 210 ; 310 ; 410) selon l'une quelconque des revendications 1 à 3, dans laquelle chaque zone de ladite pluralité de zones saillantes comprend un point extrême (44, 46, 48 ; 144, 146, 148 ; 244, 246, 248 ; 344, 346 ; 444, 446, 448) qui est un point de distance relative maximale par rapport au premier plan (30) ou un point de distance relative minimale par rapport au premier plan (30), ledit point extrême étant traversé par un plan parallèle au premier plan (30).

5. Lame de coupe (10 ; 210 ; 410) selon l'une quelconque des revendications 1 à 4, dans laquelle chaque zone saillante (14A, 14B) comprend une zone inclinée ayant un profil sans contre-dépouille et qui relie le point extrême respectif (44, 48 ; 244, 248 ; 444, 448) avec la partie plate (12 ; 212).

6. Lame de coupe (410) selon l'une quelconque des revendications 1 à 5, dans laquelle ladite partie profilée (14) comprend deux zones saillantes (444, 448) qui font saillie à partir de ladite deuxième face (33) dudit premier plan (30) séparées par une zone saillante (446) qui fait saillie à partir de ladite première face (32) dudit premier plan (30).

7. Dispositif d'obtention de plantes greffées comprenant une lame coupante selon l'une quelconque des revendications 1 à 6.

8. Dispositif selon la revendication 7, comprenant :
- un cadre de support (52) ayant un premier côté (52A) et un deuxième côté (52B) opposés l'un à l'autre ;
- un chariot mobile (60) associé au cadre (52) pour se déplacer le long d'un axe longitudinal (X-X) ;
- ladite lame (10 ; 110 ; 210 ; 310 ; 410) étant reliée au chariot mobile (60) pour opérer une coupe d'un matériau végétal (11, 13) afin de diviser ledit matériau en une partie utile (11A ; 13A) et une partie de déchet (11B ; 13B) et maintenir lesdites parties sur deux côtés opposés ;
- une base (54) connectée au cadre (52) pour supporter ledit matériau (11, 13) et servir de butée avec ladite lame ;
- un mécanisme (70, 66, 78) associé au cadre (52) pour séparer la partie de déchet (11B ; 13B) de la lame.

9. Dispositif selon la revendication 8, dans lequel ledit mécanisme comprend :
- un extracteur (66) relié de manière mobile au chariot mobile (60) et interposé entre le chariot mobile (60) et la lame, comprenant deux dents (68) insérées au moins partiellement dans les entrées de la lame et une tête (67) ;
- une butée fixe (70) reliée au cadre (52) du premier côté (52A) comprenant trois dents (72) qui entourent au moins partiellement lesdites entrées de la lame ;
- une came (74) munie d'une butée (78) et reliée au cadre (52) pour se déplacer dans une première position à l'opposé de ladite tête (67) de l'extracteur (66) et dans une deuxième position près de ladite tête de manière à empêcher l'extracteur de se déplacer dans le sens de l'axe (X-X).

10. Dispositif selon la revendication 8, comprenant en outre :
- des moyens de stockage ;
- au moins un groupe de greffage comprenant au moins deux unités de greffage diamétralement opposées ;
- un premier groupe automatique, pour alimenter un premier matériau depuis ledit moyen de stockage vers ledit groupe de greffage ;
- un second groupe automatique, pour alimenter un second matériau depuis ledit moyen de stockage vers ledit groupe de greffage ;
- une unité de commande et de contrôle pour gérer et coordonner l'un avec l'autre ledit groupe de greffage, un premier groupe d'alimentation automatique et un second groupe d'alimentation automatique ;
- ledit groupe de greffage comprenant au moins deux unités de greffage pouvant être positionnées alternativement dans une première position de travail, pour effectuer une première étape du greffage comprenant au moins la découpe dudit premier matériau, en coopération avec ledit premier groupe automatique et dans une deuxième position de travail, pour achever le greffage en coupant ledit second matériau et en couplant ce dernier au premier matériau en coopération avec ledit second groupe automatique ;
- un carrousel rotatif couplé de manière rotative au cadre pour effectuer une rotation de 180 degrés dudit au moins un groupe de greffage afin de déplacer lesdites deux unités de greffage en alternance dans lesdites positions de travail ;
- au moins deux bases associées de manière coulissante au carrousel rotatif et faisant face respectivement à ladite première position de travail et à ladite deuxième position de travail, capables de coopérer en alternance avec ladite première unité de greffage et avec ladite deuxième unité de greffe ;
- chacune desdites deux unités de greffage comprenant à son tour :
i. un chariot mobile coulissant ;
ii. une lame associée au chariot mobile pour couper ledit premier matériau en maintenant sa partie utile en coopération avec l'une desdites bases lorsque l'unité de greffage respective est située dans ladite première position de travail et / ou pour couper ledit deuxième matériau en coopération avec l'une desdites bases lorsque l'unité de greffage respective est située dans ladite deuxième position de travail ; et
iii. un extracteur, coopérant avec ladite lame et ladite base, pouvant se déplacer de manière coulissante depuis une position abaissée, qui est située au-dessous de ladite lame, vers une position surélevée capable d'entraîner ladite partie utile en alignement avec le second matériau coupé pour terminer le greffage lorsque l'unité de greffage est située dans ladite deuxième position de travail.

11. Procédé d'obtention de greffes de plantes comprenant les étapes suivantes :
- couper un premier matériau végétal orthogonalement à son axe longitudinal pour former deux extrémités ayant chacune au moins deux protubérances complémentaires comprenant en coupe transversale, partant du premier plan (30) et disposées en série les unes avec les autres, une constriction, un grossissement et un point extrême de sorte à créer des contre-dépouilles ;
- couper un deuxième matériau végétal de manière identique à la coupe du premier matériau végétal ;
- greffer une extrémité du premier matériau sur une extrémité complémentaire du deuxième matériau.

12. Procédé selon la revendication 11, dans lequel les étapes de découpe du premier et du second matériaux sont effectuées de sorte que lesdites au moins deux protubérances aient une taille sensiblement similaire.

13. Procédé selon la revendication 11, dans lequel les étapes de découpe du premier et du second matériaux sont effectuées de sorte que lesdites au moins deux protubérances aient une taille différente.

14. Plante comprenant un contour de greffage formant au moins quatre lobes ou entrées sur la circonférence de la plante entre une partie de porte-greffe et une partie de scion, ledit contour comprenant en coupe transversale, partant d'un premier plan et disposées en série les unes avec les autres, une constriction, un grossissement et un point extrême de sorte à créer des contre-dépouilles.
